# EUROPÄISCHE PATENTANMELDUNG

(11) **EP 4 697 392 A1**
(43) Veröffentlichungstag der Anmeldung: **18.02.2026**
(21) Anmeldenummer: 25195085.3
(22) Anmeldetag: 11.08.2025
(51) Int. Cl.: H01M 4/04, H01M 4/1393, H01M 4/36

(54) **VERFAHREN SOWIE PROZESSANORDNUNG ZUR VORLITHIIERUNG EINER ANODE FÜR EINE LITHIUM-IONEN-BATTERIEZELLE**

(30) Priorität: 13.08.2024 DE 102024207704
(71) Anmelder: Volkswagen Aktiengesellschaft, 38440 Wolfsburg (DE)
(72) Erfinder: Jamadar, Kartik, 38440 Wolfsburg (DE)

(57) **Zusammenfassung**

Die Erfindung betrifft ein Verfahren zur Vorlithiierung einer Anode oder eines Anoden-Vorprodukts (10) für eine Lithium-Ionen-Batteriezelle, die aus einer Ableiterfolie (11) und einer darauf beschichteten Aktivmaterialschicht (13) ausgebildet ist, wobei die Aktivmaterialschicht (13) zur Durchführung der Vorlithiierung ein Lithium-Reservoir (19) mit metallischem Lithium aufweist, und wobei in der Vorlithiierung positiv geladene Lithium-Ionen vom Lithium-Reservoir (19) in die Graphitstruktur der Aktivmaterialschicht (13) interkalieren. Erfindungsgemäß erfolgt zur Durchführung der Vorlithiierung eine Photonenbestrahlung (24), auf das Lithium-Reservoir (19), bei der Elektronen aus dem Lithium-Reservoir (19) herausgelöst werden und positiv geladene Lithium-Ionen zurückbleiben, die in die relativ negative Graphitstruktur der Anodenmaterialschicht (13) interkalieren.

## Beschreibung

Die Erfindung betrifft ein Verfahren zur Vorlithiierung einer Anode für eine Lithium-Ionen-Batteriezelle nach dem Oberbegriff des Anspruches 1 sowie eine Prozessanordnung nach Anspruch 10.

In einer Lithium-Ionen-Batteriezelle können die Anoden als Aktivmaterial Graphit aufweisen, während die Kathoden als Aktivmaterial ein Lithium-Metalloxid aufweisen können, das eine Lithiumquelle für den Ionenfluss zwischen den Anoden und den Kathoden bildet. Zum Abschluss einer Zellassemblierung wird eine Formation durchgeführt, bei der die Batteriezelle zumindest einem Lade-/Entladezyklus unterworfen wird, um eine SEl-Schicht (Solide Electrolyte Interface) sowie eine CEI-Schicht (Cathode Electrolyte Interface) vollständig auszubilden.

Bei einer solchen Batteriezelle ergeben sich die folgenden Problemstellungen: Eine erste Problemstellung besteht darin, dass es bei der der Formation, d.h. im ersten Lade-/Entladezyklus, zu einem irreversiblen Verlust der Batteriekapazität kommt. Während der Formation wird das Lithium in der Kathode und Anode verwendet, um die SEl-Schicht (Solid Electrolyte Interface) auf der Anode zu erzeugen. Diese SEI-Schicht wird während des ersten Lade- und Entladevorgangs aufgebaut. Durch den Verlust von Lithiumatomen verringert sich die Kapazität der Zelle um 10 bis 15%. Diese Kapazität ist irreversibel verloren.

Eine zweite Problemstellung besteht in einer Kupferkorrosion aufgrund einer überladenen Anode. Wenn die Anode überladen ist, d. h. das Potenzial erreicht etwa 1,5 Volt oder mehr in Bezug auf eine Basisspannung von Li/Li+, dann korrodiert das Kupfer des Anodensubstrats. Dies führt zu Pitholes im Kupfersubstrat. Dadurch wird die Haftung der Anode verringert und die elektronische Leitfähigkeit reduziert.

Eine dritte Problemstellung betrifft einen Zugang zu ungenutztem Lithium und die Handhabung von lithiummetallreichen Anoden: Bei einem herkömmlichen Vorlithierungsverfahren wird Überschuss-Lithium verwendet, da das Lithiummetall in das aktive Anodenmaterial eingebracht wird. Dies erhöht die Prozesskosten und erschwert auch die Handhabung der an Lithiummetall reichen Anode. Da Lithiummetall bei Umgebungsbedingungen sehr reaktiv ist, ist es wichtig, dass der Raum trocken ist. Da der derzeitige Stand der Technik bei der Vorlithiierung mit Lithiummetall arbeitet, muss der gesamte Elektrodenherstellungsprozess, einschließlich der Beschichtung, in einem trockenen Raum stattfinden. Dies erhöht die Energiekosten und macht die Handhabung der lithiummetallreichen Anode sehr schwierig.

Eine vierte Problemstellung betrifft den Sachverhalt, dass ein mit Lithium beschichtetes Graphitmaterial der Anode im Stand der Technik schwer wiederzuverwenden ist. Wenn die Batterie und insbesondere die Anode aufgrund von Lithium Plating altert, verliert die Batterie sehr schnell ihre Kapazität. Auch wenn das Anodenaktivmaterial noch in gutem Zustand ist, erschwert das Lithium Plating seine Verwendung. Solche Anoden werden normalerweise einem Materialausschuss zugeführt, da es schwierig ist, ein solches lithiumbeschichtetes Anodenaktivmaterial zu reparieren.

Aus der US 2022/0328803 A1 ist ein Verfahren und eine Vorrichtung zur Herstellung von Elektroden bekannt, die in Energiespeichergeräten verwendet werden. Demnach wird eine Oberfläche der Elektrode aktiviert für einen Vorbehandlungsprozess, um lose gehaltene Partikel von der Elektrodenoberfläche zu entfernen;. Außerdem umfasst das Verfahren eine Nachbehandlung einer Vorlithiierungsschicht zur Verbesserung der nachfolgenden Bindung mit Passivierungsschichten, sowie eine Nachbehandlung der Vorlithiierungsschicht zur Verbesserung/Beschleunigung der Absorption des Lithiums in das darunterliegende Elektrodenmaterial.

Die Aufgabe ist durch die Merkmale des Anspruches 1 oder 10 gelöst. Bevorzugte Weiterbildungen der Erfindung sind in den Unteransprüchen offenbart.

Die Erfindung betrifft ein Verfahren zur Vorlithiierung einer Anode für eine Lithium-Ionen-Batteriezelle, die aus einer Ableiterfolie und einer darauf beschichteten Aktivmaterialschicht ausgebildet ist. In Vorbereitung auf die Vorlithiierung weist die Aktivmaterialschicht ein Lithium-Reservoir mit metallischem Lithium auf. Während der Vorlithiierung werden positiv geladene Lithium-Ionen vom Lithium-Reservoir in die Graphitstruktur des Aktivmaterials interkaliert. Gemäß dem kennzeichnenden Teil des Anspruches 1 erfolgt zur Durchführung der Vorlithiierung eine Photonenbestrahlung. Bei der Photonenbestrahlung werden Elektronen aus dem metallischem Lithium des Lithium-Reservoirs herausgelöst, während die positiv geladenen Lithium-Ionen zurückbleiben. Diese interkalieren in die relativ negative Graphitstruktur der Anodenmaterialschicht.

In der vorliegenden Erfindung sind folgende Maßnahmen getroffen, um eine vorlithiierte Anode bereitzustellen:
So wird die Anodenbeschichtung (d.h. die Aktivmaterialschicht der Anode) nass oder trocken beschichtet, dann getrocknet und anschließend kalandriert und Schneidoperationen unterworfen, wie es auch bei herkömmlichen Verfahren der Fall ist. Nach dem Kalandrieren wird erfindungsgemäß ein Vorlithiierprozess durchgeführt. Sobald die Anodenbeschichtung in der Trockenstation Rolle-zu-Rolle-Verfahren getrocknet und dann kalandriert wurde, tritt sie in die Vorlithiierzone ein, wo Lithiumionen (d.h. kein Lithiummetall) in die Anode auf Kohlenstoffbasis eindringen und die Anode auf eine Spannung von etwa 1 Volt oder weniger in Bezug auf eine Basisspannung von Li/Li+ aufladen.

In einer Ausführungsform wird die Anode temporär mit einer dünnen Lithium-Metallfolie (ca. 1 mm) verbunden, wobei ein Polymerelektrolyt (PEO) als Bindungs- und Elektrolytmedium dient. Sowohl die Anode als auch die Lithium-Metallfolie bewegen sich mit konstanter linearer Geschwindigkeit in der Vorlithiierkammer. Die Vorlithiierkammer kann eine Temperatur von bis zu 130°C haben, um eine Verdampfung von Lösungsmittel zu ermöglichen.

Elektromagnete oder Permanentmagnete werden an den Seiten der Bewegung der Anode (zusammen mit der Lithium-Metallfolie) positioniert. Die Anode bewegt sich zusammen mit der Lithium-Metallfolie im Magnetfeld. Da sowohl die Lithium-Metallfolie als auch die Anode elektronisch leitend sind und sich im Magnetfeld bewegen, wirkt eine Lorentzkraft auf die Lithium-Metallfolie bzw. die Anode. Dies führt dazu, dass sich die Elektronen sowohl auf der Lithium-Metallfolie als auch auf der Anode in Richtung Anoden-Außenseite bewegen. An der Anoden-Außenseite, d.h. an der Lithium-Metallfolie, bildet sich ein Elektronen-Überschuss. Dies führt zum Aufbau einer negativen Ladung auf der Außenfläche und somit zur Entstehung einer Induktionsspannung. Da sich sowohl die Lithium-Metallfolie als auch die Anoden ständig im Magnetfeld bewegen, wirkt ständig eine Lorentzkraft, die einen Elektronen-Überschuss an der Außenfläche der Elektrode und der Lithium-Metallfolie erzeugt. Der Elektronen-Überschuss ist abhängig von der Größe des Magnetfelds und der Geschwindigkeit der Anode.

In der nächsten Phase wird die Lithium-Metallfolie mit UV-Strahlen bestrahlt. Da UV-Strahlen eine sehr geringe Wellenlänge aufweisen, haben sie eine höhere Energie als andere Lichtstrahlen. Wenn Photonen auf die Lithium-Metallfolie treffen, werden Elektronen aus der Lithium-Metallfolie emittiert. Die kinetische Energie der Photonen reicht aus, um die Elektronen aus dem Atomgitter zu lösen und sich dann mit ausreichender Geschwindigkeit zu entfernen, so dass sie nicht mehr zur Lithium-Metallfolie zurückkehren können.

Da sich die Elektronen aufgrund der Lorentzkraft ohnehin im Überschuss auf der Außenfläche der Lithium-Metallfolie befinden, ist es einfach, die überschüssigen Elektronen durch Photonenkollision herauszulösen. Das Herauslösen der überschüssigen Elektronen führt zu einem Elektronenmangel. Aufgrund des Elektronenmangels wandern vermehrt Elektronen von der Unterseite der Lithium-Metallfolie zur Außenfläche (aufgrund der Lorentzkraft). Dadurch entstehen vermehrt positive Lithium-Ionen im Inneren der Lithium-Metallfolie.

Überschüssige Lithium-Ionen unter der Lithium-Metallfolie bewegen sich nun zum Anoden-Aktivmaterial auf Kohlenstoffbasis, das stärker negativ geladen ist. Das bedeutet, dass die Lithium-Ionen im Kohlenstoff interkalieren und/oder eine kovalente Lithium-Kohlenstoff-Verbindung (C₆Li) eingehen. Damit wird die Vorlithiierung durch die Kombination von Lorentzkraft und Elektronenemission durch Photonenbestrahlung beschleunigt. Der Polymerelektrolyt hilft bei der Übertragung von Lithium-Ionen auf die Anode. Die Lithium-Ionen werden nicht durch Wärmeenergie oder mechanische Energie in den Kohlenstoff gezwungen. Dies geschieht alleine durch Diffusion im festen Zustand. Nach der Vorlithiierung in der Trockenzone wird die Anode gewickelt. Der Polymerelektrolyt hilft bei der Lithium-Ionen-Diffusion in den Kohlenstoff.

Die Lithium-Metallfolie wird am Ende der Vorlithiierzone wieder von der Anode abgezogen. Die abgezogene Lithium-Metallfolie kehrt wieder zu ihrer Ausgangslage zurück und wird abermals auf der Anode appliziert. Es ist wichtig, dass zwischen Anode und Lithium-Metallfolie ein Polymerelektrolyt aufgebracht wird. Die Vorlithiierkammer wird auf maximal 130°C gehalten, da so das Lösungsmittel entfernt werden kann, die Leitfähigkeit des Polymerelektrolyts (PEO) hoch ist und die Elektronen leicht aus der Lithium-Metallfolie herauslösbar sind, da sie sich aufgrund der hohen inneren Energie bereits in einem instabilen Zustand befinden. Das bedeutet, dass die von UV-Strahlen benötigte Energie reduziert werden kann.

Sobald die noch als Endlosbahn bereitgestellte vorlithiierte Anode fertig ist, wird sie wieder aufgewickelt und in einem trockenen Raum aufbewahrt. Es ist von Relevanz, dass das Lithium in der Anode nicht in Form von Lithiummetall vorliegt, sondern als kovalente Bindung mit Kohlenstoff. Das bedeutet, dass es weniger korrosiv ist als bei anderen Vorlithiierprozesses.

Das erfindungsgemäße Verfahren kann auch verwendet werden, um eine durch Lithium Plating mit Lithium beschichtete Anode wieder als erneuerte Anode für eine neue Batteriezelle zu verwenden. Anstelle der ersten Ausführungsform ist hier keine separate Lithium-Metallfolie erforderlich, da das Lithium als Lithiumschicht bereits auf der Anode vorhanden ist. Im Vorlithiierprozess wird das Lithium-Metall in Lithium-Ionen umgewandelt. Die Lithium-Ionen reagieren wiederum mit dem Kohlenstoff der Anode und bilden kovalente Bindungen. Die Lithium-Ionen werden ebenfalls durch Photonenkollisionen gebildet, die durch die Lorentz-Kraft beschleunigt werden.

Wie oben erwähnt, ist die Lithium-Metallfolie unter Zwischenordnung des Polymerelektrolyts auf der Aktivmaterialschicht der Anode aufgebracht. Der Elektrolyt (insbesondere PEO) bewirkt temporär eine Haftverbindung und beseitigt Spalte zwischen der Anodenoberfläche und der Lithium-Metallfolie. Erfindungsgemäß erfährt die Lithium-Metallfolie eine Lorentzkraft, die die Elektronen auf der Außenfläche der Lithium-Metallfolie bewegt. Es entsteht ein Elektronen-Überschuss an der Außenfläche der Lithium-Metallfolie. UV-Strahlen werden auf die Lithium-Metallfolie gerichtet, wodurch sich aus der Lithium-Metallfolie Elektronen herauslösen. Dadurch entsteht ein Elektronenmangel auf der Oberfläche der Lithium-Metallfolie. Dies führt dazu, dass vermehrt Elektronen aus dem Inneren der Lithium-Metallfolie an die Oberfläche wandern. Zusätzlich wirkt nach wie vor die die Lorentz-Kraft, die ebenfalls Elektronen auf die Außenseite der Lithium-Metallfolie bewegt. Dies führt zu einem Überschuss an positiv geladenen Lithium-Ionen im Inneren der Lithiumoberfläche. Diese Lithiumionen wandern durch den Elektrolyt (PEO) und werden in die Anode eingelagert bzw. interkaliert. Der Elektrolyt (PEO) weist bei 130°C eine hohe Lithium-Ionen-Leitfähigkeit auf. Im Aktivmaterial der Anode kann ebenfalls ein PEO-Elektrolyt oder einem Lithiumionen-leitenden Bindemittel enthalten sein, wie etwa CMC-Li oder LiPPA. Dadurch wird sichergestellt, dass sich die Lithium-Ionen im Aktivmaterial der Anode einlagern.

Am Ende der Vorlithiierkammer wird die Lithium-Metallfolie von der Anodenoberfläche abgezogen. Die Lithium-Metallfolie zum Einlass der Vorlithiierkammer rückgeführt, damit sie erneut auf die Anodenoberfläche aufgebracht werden kann.

In einer alternativen Ausführungsvariante kann das Verfahren auch ohne Lithium-Metallfolie durchgeführt werden. Wenn die Anodenoberfläche ein Lithium Plating aufweist, wird das Lithium Plating für eine Lithium-Einlagerung in die Anodenoberfläche verwendet.

In einer weiteren alternativen Ausführungsform kann das Verfahren auch durchgeführt werden, wenn metallisches Lithium als Nanopulver mit PEO-Bindemittel mit dem Aktivmaterial der Anode vermischt wird. Hier wird Lithium-Metallpulver für die Lithium-Interkalation verwendet.

Es ist auch möglich, andere flüssige Elektrolyte nach dem Stand der Technik wie Ethylencarbonat, Diethylencarbonat, Dimethylencarbonat, Propylencarbonat, Ethylenmethylcarbonat, anstelle von PEO, zu verwenden. Diese Elektrolyte werden mit dem Anodenmaterial gemischt.

Eine weitere Möglichkeit besteht darin, Lithium-Nanopulver zusammen mit dem lithiumleitenden Bindemittel CMC-Li und LiPPA und dem Polymerelektrolyten (PEO) durch Trockenmischung und Trockenbeschichtung mit dem Aktivmaterial der Anode zu vermischen. Dieses Lithiummetall im Inneren des aktiven Anodenmaterials wird als lithiumreiches Anodenmaterial für den oben beschriebenen Vorlithiierungsprozess verwendet.

Das Lithium liegt jedoch in dieser Ausführungsvariante in metallischer Form vor, die nicht brauchbar ist. Wenn dieses in Lithiummetall eingebettete Anodenmaterial in die Vorlithiierkammer eintritt, wie oben erläutert, wird das Lithiummetall in positiv geladene Lithium-Ionen umgewandelt. Diese gehen dann kovalente Bindungen mit Kohlenstoff ein. In diesem Fall ist keine Lithium-Metallfolie erforderlich, da sich das Lithiummetall bereits im aktiven Anodenmaterial befindet, bevor es in die Vorlithiierkammer gelangt.

Eine weitere Möglichkeit besteht darin, UV-härtenden Harze in Verbindung mit einem Elektrolyt (etwa Polymerelektrolyt PEO) zu verwenden. Bei dieser Option werden nach dem Abziehen der Lithium-Metallfolie zusätzlich UV-Strahlen auf das Bindemittel geleitet. Dadurch wird das Bindemittel gehärtet. Dieses gehärtete Bindemittel schützt vor dem Aufquellen der Anode. Normalerweise kommt es in der Anode aufgrund von Lithiumeinlagerungen zu Schwellungen.

Die Option, Lithiummetall während des Trockenmischens und der Trockenbeschichtung in das aktive Anodenmaterial einzubringen, ist weniger empfehlenswert. Sie ist weniger vorteilhaft, da das Lithiummetall im Anodenmaterial schwer zu handhaben ist. Der gesamte Elektrodenprozess muss in einem trockenen Raum durchgeführt werden. Außerdem werden die Lithiumpartikel tief im aktiven Material nicht der UV-Strahlung ausgesetzt, so dass die Elektronenemission ebenfalls geringer ist.

Insgesamt bietet die Erfindung die folgenden Vorteile: Bei der Vorlithiierung wird die Anode auf weniger als 1 Volt in Bezug auf eine Basisspannung von Li/Li+ aufgeladen. Dies verhindert die Korrosion des Kupfers während der Einwirkungszeit des Elektrolyts. Die Vorlithiierung verringert die irreversiblen Verluste des ersten Formations-Zyklus. Dies erhöht den coulombschen Wirkungsgrad. Die Vorlithiierung wird nach dem Kalandrieren durchgeführt und ist daher leicht zu handhaben. Die späteren Prozesse nach dem Kalandrieren werden in einem trockenen Raum durchgeführt. Dies macht die Handhabung der vorlithiierten Anode viel einfacher. Die Vorlithiierung erfolgt nach dem Prinzip der Lithium-Ionen-Interkalation, so dass stärkere kovalente Bindungen entstehen als bei anderen Vorlithiierungen nach dem Stand der Technik, da das Lithium dort in metallischer Phase vorliegt. Hier liegt Lithium nicht in der metallischen Phase vor. Die Lithiumbeschichtung kann mit diesem Verfahren vom Anodenmaterial entfernt werden, so dass die mit Lithium beschichtete Anode wieder in eine wiederverwendbare Anode umgewandelt werden kann. Das heißt, dieses Verfahren kann zur Wiederverwendung von Anoden verwendet werden. Es besteht keine Notwendigkeit, überschüssiges Lithium zu haben. Das Lithium wird nur von der Folie reduziert, die sich im Anodenmaterial einlagert. Das bedeutet, dass kein überschüssiges Lithium erforderlich ist. Der Prozess der Lithiumeinlagerung erfolgt durch einen elektrochemischen Prozess und kann durch die Intensität der UV-Strahlung und die Dichte des Magnetfeldes leicht kontrolliert werden. Der Prozess wird in einem trockenen Raum in der Vorlithiierkammer durchgeführt. Hier wird die Temperatur auf maximal 130°C gehalten, was auch dazu beiträgt, das restliche Lösungsmittel (Wasser) in der Anode zu entfernen. Daher kann der Vorlithiierprozess den Trocknungsprozess ersetzen, der normalerweise nach dem Kalandrieren durchgeführt wird. Da es sich bei der Interkalation um einen Festkörperdiffusionsprozess handelt, lagert sich Lithium auch in Hartkohle ein, die in der Regel eine niedrige Stromstärke (C-Rate) benötigt, um Lithium einzulagern. Das bedeutet, dass sich die verfügbare Kapazität der Anode erhöht. Nicht nur Graphit, sondern auch Hartkohle ist an der Kapazität beteiligt. Der Elektrolyt ist in das Anodenmaterial eingebettet. Dies trägt dazu bei, die Poren der Anode mit leitfähigem Lithiumionen-Elektrolyt zu füllen. Dies verringert die Tortuosität. Das vorgeschlagene leitfähige Lithium-Ionen-Bindemittel trägt ebenfalls zur Leitfähigkeit der Lithium-Ionen bei.

Nachfolgend sind wesentliche Erfindungsaspekte nochmals im Einzelnen hervorgehoben: So kann das Herauslösen der Elektroden aus dem Lithium-Reservoir durch folgenden Maßnahmen unterstützt werden. Gemäß einem ersten Aspekt wird die Anode während der Vorlithiierung mit einer Prozessgeschwindigkeit durch ein Magnetfeld bewegt und zwar unter Aufbau einer auf die Anode wirkenden Lorentzkraft, mittels der die Elektronen zu einer von der Photonenbestrahlung beaufschlagten Anoden-Außenseite verlagert werden. Zur Vermeidung einer Rekombination der bei der Photonenbestrahlung freigesetzten Elektronen und der positiv geladenen Lithium-Ionen ist es bevorzugt, wenn die Anode im elektrischen Feld eines Kondensators angeordnet ist. Auf diese Weise werden die freigesetzten Elektroden in Richtung positiver Kondensatorelektrode beschleunigt. Die Prozesstemperatur während der Vorlithiierung ist im Vergleich zu einer Norm-Raumtemperatur stark erhöht, und kann beispielhaft in einem Bereich von 130°C liegen, wodurch das Herauslösen der Elektronen aus dem Lithium-Reservoir weiter unterstützt wird.

Nachfolgend ist ein Ausführungsbeispiel der Erfindung anhand der beigefügten Figuren beschrieben: Es zeigen:

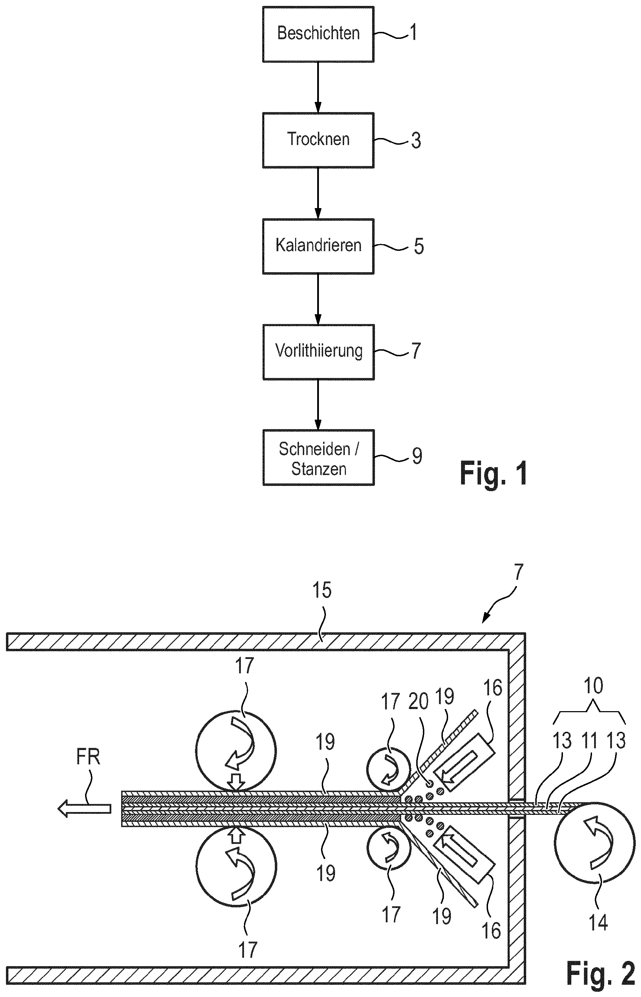

- Figuren 1 bis 8: jeweils unterschiedliche Ansichten, anhand derer die Prozessschritte zur Vorlithiierung der Anode veranschaulicht sind.

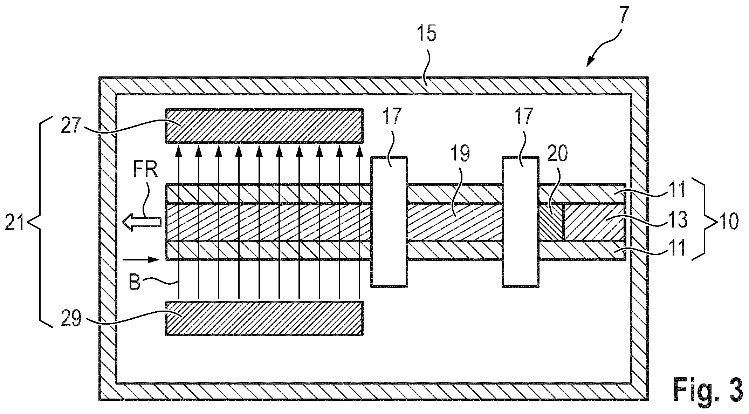

In der Figur 1 ist ein Blockschaltdiagramm einer Prozessanordnung zur Fertigung einer Anode für eine Lithium-Ionen-Batteriezelle insoweit angedeutet, als es für das Verständnis der Erfindung erforderlich ist. Demnach weist die Prozessanordnung in einer Prozessreihenfolge eine Beschichtungsstation 1, eine Trocknungsstation 3, eine Kalandrierstation 5, eine Vorlithiierstation 7 und eine Schneid/Stanzstation 9 auf. In einem Verfahren zur Fertigung der Anode wird zunächst eine noch unbeschichtete Ableiterfolie 11 (Figur 2 oder 3) als Endlosbahn bereitgestellt, die in einer kontinuierlichen Prozessgeschwindigkeit in einer Prozessrichtung FR durch die Stationen 1, 3, 5, 7, 9 geführt wird. In der Beschichtungsstation 1 wird die Ableiterfolie 11 beidseitig mit einer Aktivmaterialschicht 13 aus Graphit beschichtet, und zwar unter Bildung einer Verbundbahn 10 als Anoden-Vorprodukt. Anschließend durchläuft die Ableiterfolie 11 bzw. die Verbundbahn 10 die Trocknungsstation 3, um die beiden Aktivmaterialschichten 13 zu trocknen. In der nachgeordneten Kalandrierstation 5 wird die Porosität der getrockneten Aktivmaterialschichten 13 eingestellt.

Im Anschluss an die Kalandrierstation 5 wird die Verbundbahn 10 durch eine Vorlithiierkammer 15 (Figuren 2 bis 4) der Vorlithiierstation 7 geführt, deren Aufbau sowie Funktionsweise nachfolgend beschrieben sind. Im weiteren Prozessverlauf wird die Verbundbahn 10 zur Schneid/Stanzstation 9 transferiert, in der die Anode durch Stanz- und/oder Schneidoperationen vereinzelt wird.

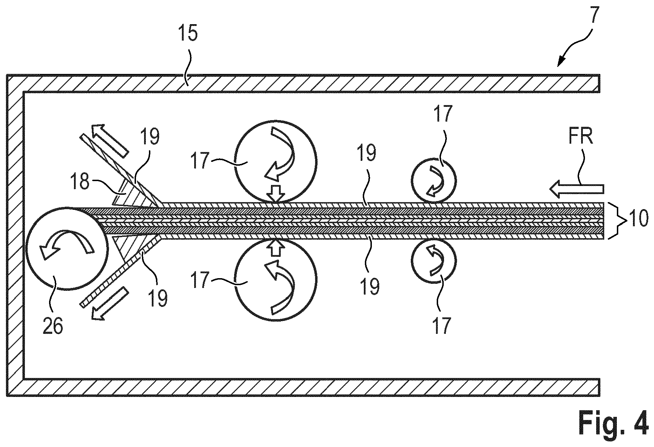

Die Figuren 2 bis 4 zeigen jeweils einen Eingangsbereich (Figur 2), einen Mittelbereich (Figur 3) und einen Ausgangsbereich (Figur 4) der Vorlithiierkammer 15, durch die die Verbundbahn 10 in der Fertigungsrichtung FR mit der Prozessgeschwindigkeit bewegt wird. Die Verbundbahn 10 besteht aus der Ableiterfolie 11 und den beidseitig auf der Ableitfolie 11 beschichteten Aktivmaterialschichten 13. Im Eingangsbereich (Figur 2) der Vorlithiierkammer 15 wird die von einer Abwickelrolle 14 abgewickelte Verbundbahn 10 mittels Druckwalzen 17 beidseitig mit Lithium-Metallfolien 19 unter Zwischenlage eines Polymerelektrolyts 20 auf die jeweilige Aktivmaterialschicht 13 gebracht. Der Polymerelektrolyt 20 wird gemäß der Figur 2 mittels Düsen 16 in die keilförmigen Spalte zwischen den mit der Verbundbahn 10 zusammenlaufenden Lithium-Metallfolien 19 eingetragen. Die beiden Lithium-Metallfolien 19 bilden ein Lithium-Reservoir für die im weiteren Prozessverlauf stattfindende Vorlithiierung.

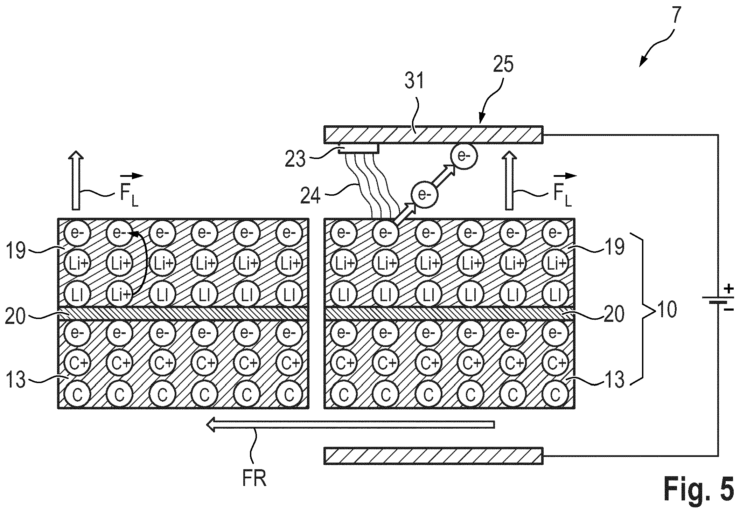

Zur Durchführung der Vorlithiierung weist die Vorlithiierkammer 15 eine Magnetanordnung 21 (Figur 3), einen UV-Strahler 23 (Figur 5) und einen Kondensator 25 (Figur 5) auf. In der Vorlithiierung werden in den Lithium-Metallfolien 19 positiv geladene Lithium-Ionen erzeugt, die von der jeweiligen Lithium-Metallfolie 19 in die Graphitstruktur der Aktivmaterialschicht 13 interkalieren. Hierzu wird die Verbundbahn 10 durch ein Magnetfeld der Magnetanordnung 21 bewegt, wodurch eine magnetische Feldstärke B auf die Verbundbahn 10 wirkt. Die magnetische Feldstärke B ist in der Figur 3 quer zur Fertigungsrichtung FR ausgerichtet, wobei die beiden Magnetpolen 27, 29 in Querflucht in der gezeigten Ansicht von oben jeweils beidseitig der Ableiterfolie 11 positioniert sind; das heißt, dass jeder Magnetpol 27, 29 mit einem Querversatz zum jeweiligen Längsrand der Verbundbahn 11 angeordnet ist.

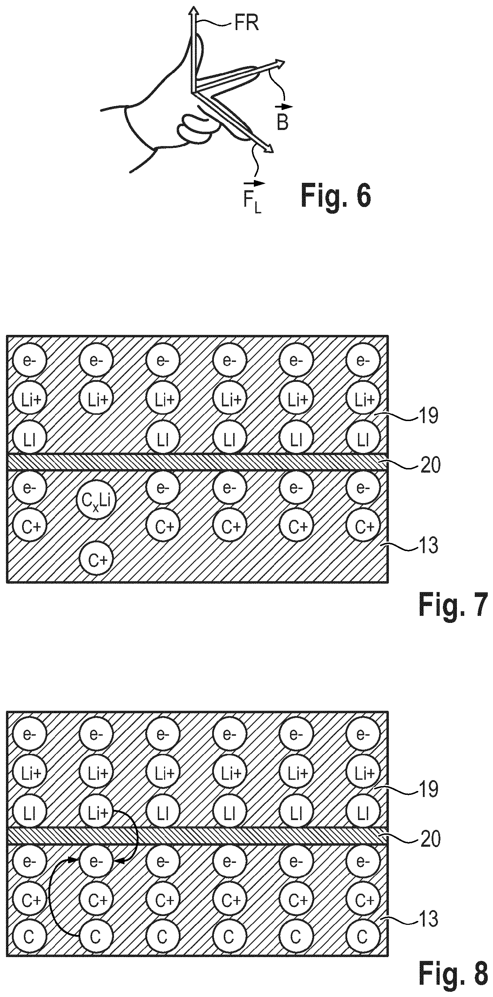

Auf diese Weise baut sich in der durch die Magnetanordnung 21 laufende Verbundbahn 10 gemäß der in der Figur 6 veranschaulichten Linke-Hand-Regel eine Lorentzkraft F_{L} auf, mittels der die Elektronen in der Verbundbahn 10 zu der dem UV-Strahler 23 zugewandten Anoden-Außenseite, das heißt der Lithium-Metallfolie 19, bewegt werden, wie es in der Figur 5 angedeutet ist. Gemäß der Figur 5 oder 8 bewegen sich Elektronen von der Aktivmaterialschicht 13 und der Lithium-Metallfolie 19 in Richtung auf die, dem UV-Strahler 23 zugewandten Seite der Verbundbahn 10, wodurch sich dort ein Elektronen-Überschuss bildet. Somit herrscht auf der, dem UV-Strahler 23 zugewandten Außenseite der Verbundbahn 10 ein Elektronen-Überschuss. Mithilfe einer von dem UV-Strahler 23 durchgeführten Photonenbestrahlung 24 können daher Elektronen aus der Lithium-Metallfolie 19 herausgelöst werden, während positiv geladene Lithium-Ionen in den Lithium-Metallfolien 19 zurückbleiben. Diese interkalieren in die relativ negative Graphitstruktur der Anodenmaterialschicht 13, und zwar gemäß der Figur 7 unter Bildung von C₆Li, in der sechs Kohlenstoffatome ein positiv geladenes Lithiumion und ein Elektron aufnehmen.

Um eine Rekombination der aus den Lithium-Metallfolien 19 herausgelösten Elektroden mit den positiv geladenen Lithium-Ionen zu vermeiden, ist dem Magnetfeld (Figur 3) ein elektrisches Feld des Kondensators 25 (Figur 5) überlagert. Demnach werden die mittels der Photonenstrahlung 24 freigesetzten Elektronen in Richtung der positiven Kondensatorelektrode 31 des Kondensators 25 beschleunigt.

Durch das Zusammenspiel des UV-Strahlers 23 mit dem Kondensator 25 und der Magnetanordnung 21 werden ständig Elektronen von der Oberfläche der Lithium-Metallfolie 19 herausgelöst, was zu einer vermehrten Bildung von Lithium-Ionen innerhalb der Lithium-Metallfolie 19 führt. Diese Lithium-Ionen wandern durch den Polymerelektrolyt 20 hindurch in Richtung Anoden-Aktivmaterial.

Nach erfolgter Vorlithiierung werden die beiden Lithium-Metallfolien 19 im Ausgangsbereich der Vorlithiierkammer 15 mittels Abstreifer 18 (Figur 4) wieder von den Aktivmaterialschichten 13 der Verbundbahn 10 gelöst. Im Anschluss daran wird die Verbundbahn 10 auf eine Aufwickelrolle 26 aufgewickelt und zur Schneid/Stanzstation 9 transferiert.

### Bezugszeichenliste

- 1: Beschichtungsstation
- 3: Trocknungsstation
- 5: Kalandrierstation
- 7: Vorlithiierstation
- 9: Schneid/Stanzstation
- 10: Verbundbahn
- 11: Ableiterfolie
- 13: Aktivmaterialschicht
- 14: Abwickelrolle
- 15: Vorlithiierkammer
- 16: Düse
- 17: Druckwalzen
- 18: Abstreifer
- 19: Lithium-Metallfolie
- 20: Polymerelektrolyt
- 21: Magnetanordnung
- 23: UV-Strahler
- 24: Photonenbestrahlung
- 25: Kondensator
- 26: Aufwickelrolle
- 27, 29: Magnetpole
- 31: Kondensatorelektrode
- FR: Fertigungsrichtung
- F_{L}: Lorentzkraft
- B: magnetische Feldstärke

## Patentansprüche

1. Verfahren zur Vorlithiierung einer Anode oder eines Anoden-Vorprodukts (10) für eine Lithium-Ionen-Batteriezelle, die aus einer Ableiterfolie (11) und einer darauf beschichteten Aktivmaterialschicht (13) ausgebildet ist, wobei die Aktivmaterialschicht (13) zur Durchführung der Vorlithiierung ein Lithium-Reservoir (19) mit metallischem Lithium aufweist, und wobei in der Vorlithiierung positiv geladene Lithium-Ionen vom Lithium-Reservoir (19) in die Graphitstruktur der Aktivmaterialschicht (13) interkalieren, **dadurch gekennzeichnet, dass** zur Durchführung der Vorlithiierung eine Photonenbestrahlung (24), auf das Lithium-Reservoir (19) erfolgt, bei der Elektronen aus dem Lithium-Reservoir (19) herausgelöst werden und positiv geladene Lithium-Ionen zurückbleiben, die in die relativ negative Graphitstruktur der Anodenmaterialschicht (13) interkalieren.

2. Verfahren nach Anspruch 1, **dadurch gekennzeichnet, dass** während der Vorlithiierung die Anode oder das Anoden-Vorprodukt (10) mit einer Prozessgeschwindigkeit durch ein Magnetfeld (B) bewegt wird, und zwar unter Aufbau einer auf die Anode wirkenden Lorentzkraft (F_{L}), mittels der Elektronen in der Anode oder dem Anoden-Vorprodukt (10) zu einer von der Photonenbestrahlung (24) beaufschlagten Anoden-Außenseite verlagert werden, wodurch das Herauslösen der Elektroden aus dem Lithium-Reservoir (19) unterstützt wird.

3. Verfahren nach Anspruch 1 oder 2, **dadurch gekennzeichnet, dass** zur Vermeidung einer Rekombination der aus dem Lithium-Reservoir (19) herausgelösten Elektronen und der positiv geladenen Lithium-Ionen die Anode oder das Anoden-Vorprodukt (10) im elektrischen Feld eines Kondensators (25) angeordnet ist, in dem die freigesetzten Elektronen in Richtung positiver Kondensatorelektrode (31) beschleunigt werden, und/oder dass die Prozesstemperatur während der Vorlithiierung im Vergleich zu einer Raumtemperatur stark erhöht ist, insbesondere in einen Bereich von 130°C, wodurch das Herauslösen der Elektronen aus dem Lithium-Reservoir (19) unterstützt wird.

4. Verfahren nach einem der vorhergehenden Ansprüche, **dadurch gekennzeichnet, dass** die Photonenbestrahlung (24) durch eine hochenergetische UV-Strahlung mit sehr geringer Wellenlänge erfolgt, um das Herauslösen der Elektronen aus dem Lithium-Reservoir (19) zu unterstützen.

5. Verfahren nach einem der vorhergehenden Ansprüche, **dadurch gekennzeichnet, dass** die Vorlithiierung in einer Prozessabfolge zur Fertigung der Anode integriert ist, bei der die Ableiterfolie (11) als Endlosbahn die Prozessabfolge durchläuft, die die folgenden Prozessschritte aufweist:
- Beschichten, bei dem die Ableiterfolie (11) mit dem Aktivmaterial beschichtet wird, und zwar unter Bildung einer Verbundbahn (10) als Anoden-Vorprodukt,
- Trocknen, bei dem die Aktivmaterialschicht (13) der Verbundbahn (10) getrocknet wird,
- Kalandrieren, bei dem die Porosität der getrockneten Aktivmaterialschicht (13) der Verbundbahn (10) eingestellt wird,
- Schneiden/Stanzen, bei dem die Verbundbahn (10) zur Anode vereinzelt wird, und dass insbesondere die Vorlithiierung nach dem Kalandrieren stattfindet.

6. Verfahren nach einem der vorhergehenden Ansprüche, **dadurch gekennzeichnet, dass** das Lithium-Reservoir (19) eine Lithiumlage ist, die auf der Aktivmaterialschicht (13) beschichtet ist, und dass insbesondere die Lithiumlage (19) eine Lithium-Metallfolie ist, die in Vorbereitung auf die Vorlithiierung, insbesondere unter Zwischenlage eines Polymerelektrolyts (20), etwa PEO, auf die Aktivmaterialschicht (13) der Anode oder des Anoden-Vorprodukts (10) aufgebracht wird, und dass insbesondere die Lithium-Metallfolie (19) nach erfolgter Vorlithiierung wieder von der Aktivmaterialschicht (13) gelöst wird.

7. Verfahren nach Anspruch 6, **dadurch gekennzeichnet, dass** die Lithiumlage eine insbesondere durch Lithium Plating erfolgte Ablagerung von metallischem Lithium auf der Aktivmaterialschicht (13) ist, die während des Lade-/Entladeprozesses im Batteriezellen-Betrieb entsteht.

8. Verfahren nach einem Anspruch 6, **dadurch gekennzeichnet, dass** die Lithiumlage eine Verbundschicht ist, bei der metallisches Lithium in Pulverform, insbesondere als Nanopulver, in einem Bindermaterial, insbesondere PEO, eingebettet ist.

9. Verfahren nach einem der Ansprüche 1 bis 4, **dadurch gekennzeichnet, dass** das Lithium-Reservoir als metallisches Lithiumpulver, insbesondere Nanopulver, unmittelbar in das Aktivmaterial der Anode gemischt ist.

10. Prozessanordnung zur Durchführung eines Verfahrens nach einem der vorhergehenden Ansprüche, insbesondere mit einer Vorlithiier-Station (7) mit einer Vorlithiierkammer (15) in der die Vorlithiierung durchführbar ist.
